(19) Europäisches Patentamt
European Patent Office
Office européen des brevets

(11) **EP 3 460 727 A1**

(12) **EUROPÄISCHE PATENTANMELDUNG**

(43) Veröffentlichungstag:
**27.03.2019  Patentblatt 2019/13**

(51) Int Cl.:
**G06N 20/00** (2019.01)    **B61L 1/00** (2006.01)
**B61C 3/00** (2006.01)

(21) Anmeldenummer: **18192372.3**

(22) Anmeldetag: **04.09.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **26.09.2017  DE 102017217099**

(71) Anmelder: **Siemens Mobility GmbH**
**81739 München (DE)**

(72) Erfinder: **Aufderheide, Helge**
**80634 München (DE)**

(54) **VERFAHREN ZUR UNTERSUCHUNG EINES FUNKTIONSVERHALTENS EINES TECHNISCHEN SYSTEMS UND AUSWERTEEINHEIT**

(57)    Die Erfindung betrifft ein Verfahren zur Untersuchung eines Funktionsverhaltens eines technischen Systems (2) aufweisend mehrere Komponenten (4, 6, 8, 10, 12, 14, 16) und eine sich anhand von technischen Abhängigkeiten der Komponenten (4, 6, 8, 10, 12, 14, 16) ergebenden Systemstruktur.

Um ein verbessertes Verfahren zu erreichen, wird vorgeschlagen, dass anhand der Systemstruktur aus den mehreren Komponenten (4, 6, 8, 10, 12, 14, 16) technisch gleichverhaltende Komponenten (10) ermittelt werden, die technisch gleichverhaltenden Komponenten (10) unter Verwendung ihres Funktionsverhaltens in Cluster (22, 24, 26) gruppiert werden und technische Abhängigkeiten der Clusterelemente mindestens eines der Cluster (22, 24, 26) ermittelt werden.

FIG 1

EP 3 460 727 A1

**Beschreibung**

Die Erfindung betrifft ein Verfahren zur Untersuchung eines Funktionsverhaltens eines technischen Systems aufweisend mehrere Komponenten und eine sich anhand von technischen Abhängigkeiten der Komponenten ergebenden Systemstruktur.

Es ist bekannt, dass zur Untersuchung eines Funktionsverhaltens eines technischen Systems beispielsweise ein aktueller Betriebsparameterwert der zu untersuchenden Komponente mit einem festen Grenzwert verglichen wird. Ist beispielsweise der Betriebsparameterwert der zu untersuchenden Komponente größer als der feste Grenzwert, wird erkannt, dass die zu untersuchende Komponente ein anormales Verhalten zeigt. Die Festsetzung des Grenzwerts setzt jedoch bereits Wissen über ein bisheriges bzw. über ein übliches Verhalten des Systems und damit Wissen über ein bisheriges bzw. über ein übliches Verhalten der Komponenten voraus. Trotz dieses Wissens ist die Festsetzung des Grenzwerts mit großen Unsicherheiten behaftet.

Eine Aufgabe der Erfindung ist es, ein verbessertes Verfahren zur Untersuchung eines Funktionsverhaltens zumindest einer technischen Anlage anzugeben.

Die Aufgabe wird gelöst durch ein Verfahren zur Untersuchung eines Funktionsverhaltens eines technischen Systems aufweisend mehrere Komponenten und eine sich anhand von technischen Abhängigkeiten der Komponenten ergebenden Systemstruktur, bei dem erfindungsgemäß anhand der Systemstruktur aus den mehreren Komponenten technisch gleichverhaltende Komponenten ermittelt werden, die technisch gleichverhaltenden Komponenten unter Verwendung ihres Funktionsverhaltens in Cluster gruppiert werden und technische Abhängigkeiten der Clusterelemente mindestens eines der Cluster ermittelt werden.

Insbesondere können anhand der Systemstruktur aus den mehreren Komponenten zu untersuchende technisch gleichverhaltende Komponenten ermittelt werden.

Mit dem Verfahren ist es möglich, das Funktionsverhalten des Systems ohne Wissen über ein bisheriges bzw. über ein übliches Verhalten des Systems zu untersuchen. Auf eine Festsetzung eines Grenzwerts kann mit diesem Verfahren verzichtet werden.

Mit dem Verfahren können Einflüsse auf eine Struktureinheit der Systemstruktur, wie z. B. Umwelteinflüsse, eine Laufleistung der Systemstruktur oder eine umgesetzte Leistung der Systemstruktur berücksichtigt werden. Ferner können solche Einflüsse erkannt werden, beispielsweise falls die ermittelte technische Abhängigkeit der Clusterelemente eines der Cluster eine Zugehörigkeit dieser Clusterelemente zu einer bestimmten Struktureinheit umfasst.

Vorzugsweise bilden diejenigen technisch gleichverhaltenden Komponenten, welche unter Verwendung ihres Funktionsverhaltens in einen gemeinsamen Cluster gruppiert werden, die Clusterelemente dieses Clusters. Ein jeweiliger Cluster umfasst sinnvollerweise zumindest eine Komponente. Die zumindest eine Komponente des jeweiligen Clusters ist vorzugsweise ein Element des jeweiligen Clusters, auch Clusterelement.

Eine Komponente kann beispielsweise ein Bauteil oder eine Bauteilgruppe sein.

Die Formulierung, dass "technische Abhängigkeiten der Clusterelemente mindestens eines der Cluster ermittelt werden", schließt vorzugsweise nicht aus, dass der zumindest eine Cluster nur ein Clusterelement umfasst. Dass "technische Abhängigkeiten der Clusterelemente mindestens eines der Cluster ermittelt werden" meint vorzugsweise, dass die technischen Abhängigkeiten aller Clusterelemente des zumindest einen Clusters ermittelt werden.

Die Systemstruktur kann anhand der technischen Abhängigkeiten der Komponenten des technischen Systems bestimmt werden. Weiter kann die Systemstruktur vorgegeben sein.

Anhand der Systemstruktur werden aus den mehreren Komponenten technisch gleichverhaltende Komponenten ermittelt. Als technisch gleichverhaltende Komponenten können Komponenten aufgefasst werden, welche technisch gleichartig sind und welche die gleichen technischen Abhängigkeiten aufweisen. Insbesondere weisen technisch gleichverhaltende Komponenten die gleichen technischen Abhängigkeiten auf. Vorzugsweise sind technisch gleichverhaltende Komponenten untereinander austauschbar. Bei gleichen Randbedingungen wird von technisch gleichverhaltenden Komponenten ein ähnliches Funktionsverhalten erwartet.

Das Funktionsverhalten einer jeweiligen Komponente ist zweckmäßigerweise abhängig von zumindest einem Betriebsparameterwert dieser Komponente. Vorzugsweise hat der Betriebsparameterwert der jeweiligen Komponente Einfluss auf das Funktionsverhalten der jeweiligen Komponente. Ein Betriebsparameterwert dieser Komponente kann auch ein Betriebsparameterwert einer übergeordneten Struktureinheit sein, welcher vorzugsweise Einfluss auf das Funktionsverhalten der jeweiligen Komponente hat. Ein Betriebsparameterwert kann ein Wert einer Temperatur, eines Drucks, einer anliegenden Spannung, einer aufgenommenen Leistung, einer Rotationsgeschwindigkeit usw. sein.

Das Funktionsverhalten einer jeweiligen Komponente, kurz das jeweilige Funktionsverhalten, kann unter Verwendung des zumindest einen Betriebsparameterwerts beschrieben werden. Beispielsweise kann das jeweilige Funktionsverhalten unter Verwendung einer Abweichung des zumindest einen Betriebsparameterwerts von einem Referenzwert beschrieben werden. Weiter kann das jeweilige Funktionsverhalten unter Verwendung einer zeitlichen Änderung des zumindest einen Betriebsparameterwerts beschrieben werden.

Es ist bevorzugt, wenn das jeweilige Funktionsverhalten der technisch gleichverhaltenden Komponenten jeweils mittels eines Computerprogramms modelliert wird. Insbesondere werden die Funktionsverhalten der technisch gleichverhaltenden Komponenten jeweils separat modelliert. Zweckmäßigerweise wird dem Computerprogramm zur Modellierung jeweils zumindest ein Betriebsparameter der jeweiligen Komponente übergeben, insbesondere der zuvor genannte Betriebsparameterwert der jeweiligen Komponente. Weiter ist es zweckmäßig, wenn das Computerprogramm zur Modellierung jeweils zumindest einen Betriebsparameter der jeweiligen Komponente verarbeitet. Insbesondere kann das Computerprogramm zur Modellierung jeweils den zuvor übergebenen Betriebsparameter der jeweiligen Komponente verarbeiten.

Das jeweilige Funktionsverhalten kann unter Verwendung von maschinellen Lernmethoden ("machine learning") modelliert werden.

Zweckmäßigerweise werden zur Gruppierung die Funktionsverhalten der technisch gleichverhaltenden Komponenten untereinander verglichen. Die technisch gleichverhaltenden Komponenten werden vorzugsweise anhand einer Ähnlichkeit ihres Funktionsverhaltens in Cluster gruppiert.

Bei dem Vergleich der Funktionsverhalten der technisch gleichverhaltenden Komponenten untereinander kann/können der zumindest eine Betriebsparameterwert, die Abweichungen des zumindest einen Betriebsparameterwerts von einem Referenzwert und/oder die zeitliche Änderung des zumindest einen Betriebsparameterwerts verglichen werden. Ferner können bei dem Vergleich des jeweiligen Funktionsverhaltens der technisch gleichverhaltenden Komponenten untereinander zumindest eine Modellierungseigenschaft verglichen werden. Eine Modellierungseigenschaft, auch Modellierungs-Charakteristika, kann z.B. eine Wichtung des zumindest einen Betriebsparameterwerts, insbesondere eine Wichtung mehrerer Betriebsparameterwerte, sein. Weiter kann eine Modellierungseigenschaft ein zur Modellierung genutztes Abhängigkeitsverhältnis mehrerer Betriebsparameter untereinander sein.

Das jeweilige Funktionsverhalten kann beispielsweise unter Verwendung eines neuronalen Netzes modelliert werden. In diesem Fall kann eine Modellierungseigenschaft beispielsweise Gewichte von Knoten des neuronalen Netzes sein.

Vorzugsweise werden die Funktionsverhalten der technisch gleichverhaltenden Komponenten untereinander verglichen, indem das Funktionsverhalten der jeweiligen Komponenten beschreibende Funktionsgrößen untereinander verglichen werden. Das heißt, es werden zweckmäßigerweise Funktionsgrößen verglichen, welche das Funktionsverhalten der jeweiligen Komponenten beschreiben.

Vorzugsweise wird bei dem Vergleich der jeweiligen Funktionsgrößen untereinander ein Vergleichswert ermittelt. Es ist bevorzugt, wenn der Vergleichswert die Ähnlichkeit der miteinander verglichenen Funktionsgrößen beschreibt. Insbesondere kann der Vergleichswert die Ähnlichkeit der miteinander verglichenen Funktionsgrößen quantifizieren.

Das jeweilige Funktionsverhalten der technisch gleichverhaltenden Komponenten kann jeweils unter Verwendung einer eindimensionalen Funktionsgröße beschrieben wird. Das heißt, die zuvor genannte jeweilige Funktionsgröße kann eine eindimensionale Funktionsgröße sein.

Es ist bevorzugt, wenn das jeweilige Funktionsverhalten der technisch gleichverhaltenden Komponenten jeweils unter Verwendung einer mehrdimensionalen Funktionsgröße beschrieben wird. Das heißt, vorzugsweise ist die zuvor genannte jeweilige Funktionsgröße eine mehrdimensionale Funktionsgröße. Beispielsweise kann die jeweilige Funktionsgröße ein Vektor oder eine Matrix sein.

Der Vergleichswert kann beispielsweise eine Distanz zwischen den Funktionsgrößen umfassen. Weiter kann der Vergleichswert einen Winkel zwischen den Funktionsgrößen umfassen, insbesondere falls die jeweilige Funktionsgröße mehrdimensional ist.

Zweckmäßigerweise werden die technisch gleichverhaltenden Komponenten unter Verwendung eines Clusterverfahrens in Clustern gruppiert.

Beispielsweise können die technisch gleichverhaltenden Komponenten unter Verwendung eines partitionierenden Clusterverfahrens und/oder eines hierarchischen Clusterverfahrens in Clustern gruppiert werden. Das partitionierende Clusterverfahren kann z.B. ein sogenanntes K-Means-Clustering sein. Weiter kann das partitionierende Clusterverfahren z.B. ein sogenanntes DBSCAN-Clustering sein, bei welchem insbesondere die Anzahl der zu bildenden Cluster nicht vorgegeben werden muss. Das hierarchische Clusterverfahren kann z.B. ein Clusterverfahren mit einem sogenannten Cutoff sein.

Es ist bevorzugt, wenn zumindest ein statistisch auffälliger Cluster identifiziert wird. Beispielsweise kann der zumindest eine statistisch auffällige Cluster unter Verwendung von "Statistical Outlier Selection" und/oder unter Verwendung von "OneClass-SupportVector-Machine" identifiziert werden. Weiter kann der zumindest eine statistisch auffällige Cluster anhand seiner, insbesondere geringen, Größe identifiziert werden. Insbesondere kann der zumindest eine statistisch auffällige Cluster eine geringere Größe haben als ein anderer Cluster. Die Größe eines Clusters wird vorzugsweise anhand der Anzahl seiner Clusterelemente bestimmt.

Zweckmäßigerweise werden technische Abhängigkeiten der Clusterelemente dieses zumindest einen statistisch auffälligen Clusters ermittelt. Das heißt, der mindestens eine der Cluster, für dessen Clusterelemente technische Abhängigkeiten ermittelt werden, ist vorzugsweise ein statistisch auffälliger Cluster, insbesondere der zuvor genannte statistisch auffällige Cluster.

Es können technische Abhängigkeiten der Clusterelemente von mehreren der Cluster ermittelt werden.

Die Systemstruktur kann beispielsweise eine Baumstruktur sein, insbesondere eine hierarchische Baumstruktur. Weiter kann die Systemstruktur eine Grafenstruktur sein. Ferner kann die Systemstruktur eine Netzwerkstruktur sein.

Es ist vorteilhaft, wenn die Systemstruktur Strukturebenen aufweist. Die Strukturebenen können hierarchische Ebenen, Grafen-Orbits oder Netzwerk-Orbits sein. Eine hierarchische Ebene des Systems kann beispielsweise eine System-Ebene, eine Subsystem-Ebene, eine Komponentengruppen-Ebene, eine Komponenten-Ebene und/oder eine andere Ebene sein.

Weiter ist es vorteilhaft, wenn die Zugehörigkeiten der Clusterelemente des zumindest einen Clusters zu den Strukturebenen ermittelt werden. Das heißt, wenn die technischen Abhängigkeiten der Clusterelemente des mindestens einen Clusters ermittelt werden, dann können die Zugehörigkeiten der Clusterelemente des zumindest einen Clusters zu den Strukturebenen ermittelt werden.

Beispielsweise können die Zugehörigkeiten der Clusterelemente des zuvor genannten statistisch auffälligen Clusters zu den Strukturebenen ermittelt werden. Auf diese Weise können die Clusterelemente des statistisch auffälligen Clusters einem Strukturelement zugeordnet werden.

Auf diese Weise kann erkannt werden, ob die Clusterelemente des zumindest einen Clusters, insbesondere des statistisch auffälligen Clusters, einer einzelnen Strukturebene vollkommen zugeordnet werden können. Dies ist zweckmäßigerweise dann der Fall, wenn alle Clusterelemente des zumindest einen Clusters zu einer Struktureinheit einer Strukturebene zugeordnet werden können.

Wenn die Clusterelemente des zumindest einen Clusters, insbesondere des statistisch auffälligen Clusters, einer einzelnen Strukturebene vollkommen zugeordnet werden können, dann liegt vorzugsweise auf dieser Strukturebene, insbesondere in dieser Struktureinheit, eine Auffälligkeit. Liegt die Auffälligkeit beispielsweise auf der Komponenten-Ebene, so kann beispielsweise von einem Defekt einer Komponente ausgegangen werden. Vorzugsweise kann diejenige Komponente, welche das Clusterelement des zumindest einen Clusters bildet, defekt sein.

Liegt die Auffälligkeit dagegen beispielsweise auf der System-Ebene und ist die Auffälligkeit keiner anderen Ebene unter der System-Ebene zuordenbar, so kann beispielsweise davon ausgegangen werden, dass die Auffälligkeit über alle Strukturen über das gesamte System hinweg auftritt. In diesem Fall kann die Auffälligkeit betriebsbedingt oder systembedingt sein. Weiter kann in diesem Fall vorzugsweise ein Defekt der einzelnen Komponenten ausgeschlossen werden.

Die technisch gleichverhaltenden Komponenten können manuell anhand der Systemstruktur aus den mehreren Komponenten ermittelt werden. Weiter können die technisch gleichverhaltenden Komponenten automatisch anhand der Systemstruktur aus den mehreren Komponenten ermittelt werden.

In einer bevorzugten Ausgestaltungsform der Erfindung läuft zumindest das Gruppieren in Cluster automatisch ab. Das heißt, die technisch gleichverhaltenden Komponenten können automatisch unter Verwendung ihres Funktionsverhaltens in Cluster gruppiert werden.

Weiter ist es bevorzugt, wenn die Ermittlung der technischen Abhängigkeiten automatisch abläuft. Das heißt, technische Abhängigkeiten der Clusterelemente des zumindest einen Clusters können automatisch ermittelt werden.

Das System kann zumindest eine technische Anlage umfassen. Beispielsweise kann das System zumindest ein Fahrzeug, insbesondere zumindest ein Schienenfahrzeug, umfassen.

Zweckmäßigerweise ist das System ein Verband mehrerer technischer Anlagen.

In einer vorteilhaften Ausgestaltung der Erfindung ist das System eine Fahrzeugflotte mehrerer Fahrzeuge. Insbesondere kann das System eine Fahrzeugflotte mehrerer Schienenfahrzeuge sein.

Beispielsweise können die technisch gleichverhaltenden Komponenten Motoren sein. Weiter können die technisch gleichverhaltenden Komponenten z.B. Drehgestelle sein. Ferner können die technisch gleichverhaltenden Komponenten z.B. Lüfter sein. Auch andere sich technisch gleichverhaltende Komponenten des Systems sind möglich.

Die Erfindung und/oder die beschriebenen Weiterbildungen kann/können - zumindest teilweise, wie auch im Gesamten - sowohl in Software als auch in Hardware, letztes beispielsweise unter Verwendung einer speziellen elektrischen Schaltung, realisiert werden.

Ferner ist/sind eine Realisierung der Erfindung und/oder einer beschriebenen Weiterbildung - zumindest teilweise, wie auch im Gesamten - möglich durch ein computerlesbares Speichermedium, auf welchem ein Computerprogramm gespeichert ist, welches, wenn es auf einem Computer ausgeführt wird, die Erfindung oder deren Weiterbildung ausführt.

Auch kann/können die Erfindung und/oder die beschriebenen Weiterbildungen - zumindest teilweise, wie auch im Gesamten - durch ein Computerprogrammerzeugnis realisiert sein, welches ein Speichermedium aufweist, auf welchem ein Computerprogramm gespeichert ist, welches, wenn es auf einem Computer ausgeführt wird, die Erfindung und/oder die Weiterbildungen ausführt.

Ferner betrifft die Erfindung eine Auswerteeinheit zur Untersuchung eines Funktionsverhaltens eines technischen Systems, wobei letzteres mehrere Komponenten und eine sich anhand von technischen Abhängigkeiten der Komponenten ergebenden Systemstruktur aufweist. Anhand der Systemstruktur sind aus den mehreren Komponenten technisch gleichverhaltende Komponenten ermittelbar. Insbesondere können anhand der Systemstruktur aus den mehreren Komponenten zu untersuchende technisch gleichverhaltende Komponenten ermittelbar sein. Die technisch gleichverhaltenden Komponenten können außerhalb der Auswerteeinheit, beispielsweise manuell, ermittelt werden. Außerdem können die technisch gleichverhaltenden Komponenten der Auswerteeinheit vorgegeben sein/werden. Weiter können die technisch gleichverhaltenden Komponenten von der Auswerteeinheit ermittelt werden.

Erfindungsgemäß ist die Auswerteeinheit dazu eingerichtet, sich technisch gleichverhaltende Komponenten unter Verwendung ihres Funktionsverhaltens in Cluster zu gruppieren und technische Abhängigkeiten der Clusterelemente mindestens eines der Cluster zu ermitteln.

Die Auswerteeinheit kann zur Durchführung des zuvor beschriebenen Verfahrens eingesetzt werden.

Auf der Auswerteeinheit kann das zuvor genannte Computerprogramm zur Modellierung hinterlegt sein. Weiter kann das zuvor genannte Computerprogramm zur Modellierung auf der Auswerteeinheit ausgeführt werden. Ferner kann das zuvor genannte Computerprogramm separat zu der Auswerteeinheit sein.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und der erfindungsgemäßen Auswerteeinheit kombinierbar. So sind Verfahrensmerkmale auch als Eigenschaft der entsprechenden Auswerteeinheit gegenständlich formuliert zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:

FIG 1    eine Flotte mehrerer Schienenfahrzeuge und

FIG 2    ein Diagramm.

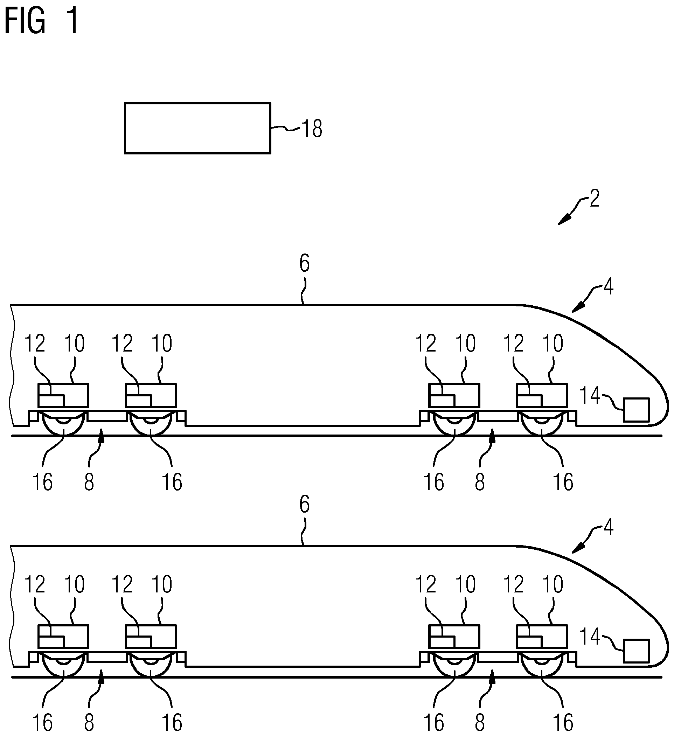

FIG 1 zeigt ein technisches System 2, hier eine Flotte 2 mehrerer Schienenfahrzeuge 4. Der Übersichtlichkeit halber sind in FIG 1 nur zwei Schienenfahrzeuge 4 gezeigt. Die Flotte 2 kann jedoch eine beliebige Anzahl an Schienenfahrzeugen 4 aufweisen.

Jedes der Schienenfahrzeuge 4 hat zumindest einen Triebwagen 6. Jedes der Schienenfahrzeuge 4 kann weitere Wagen aufweisen, welche hier nicht gezeigt sind.

Jeder der Triebwagen 6 weist zwei Drehgestelle 8 auf. In diesem Beispiel umfasst jedes Drehgestell 8 jeweils zwei Motoren 10. Jeder der Motoren 10 kann wiederum einen oder mehrere Sensoren 12 zur Ermittlung von Betriebsparameterwerten des jeweiligen Motors 10 umfassen. Beispielhaft ist hier jeweils ein Sensor 12 dargestellt. Der Sensor 12 eines jeweiligen Motors 10 kann beispielsweise ein Temperatursensor sein.

Der Zug weist zumindest einen weiteren Sensor 14 auf, beispielsweise einen Geschwindigkeitssensor.

An jedem Drehgestell 8 sind jeweils zwei Radsätze 16 positioniert, welche unter Verwendung der Motoren 10 des jeweiligen Drehgestells 8 angetrieben werden.

Die Flotte 2 weist in diesem Beispiel also zumindest folgende Komponenten auf: Schienenfahrzeuge 4, Triebwagen 6, Drehgestelle 8, Motoren 10, Sensoren 12, 14 und Radsätze 16.

Das technische System 2, hier die Flotte 2, weist eine Systemstruktur auf, welche sich anhand von technischen Abhängigkeiten der Komponenten 4, 6, 8, 10, 12, 14 und 16 der Flotte 2 ergibt.

In diesem Beispiel ist die Systemstruktur eine hierarchische (Baum-)Struktur. Die Systemstruktur umfasst mehrere System-Ebenen. In diesem Beispiel umfasst die Systemstruktur eine Flotten-Ebene, eine Schienenfahrzeug-Ebene, eine Wagen-Ebene, eine Drehgestell-Ebene und eine Motoren-Ebene. Entsprechend umfasst das System mehrere Struktureinheiten, nämlich Schienenfahrzeuge 4, Triebwagen 6, Drehgestelle 8, Motoren 10.

FIG 1 zeigt außerdem eine Auswerteeinheit 18 zur Untersuchung eines Funktionsverhaltens des technischen Systems 2, hier der Flotte 2 der mehreren Schienenfahrzeuge 4.

Anhand der Systemstruktur werden aus den mehreren Komponenten 4, 6, 8, 10, 12, 14 und 16 technisch gleichverhaltende Komponenten ermittelt. In diesem Beispiel wird ermittelt, dass sich die Motoren 10 der Drehgestelle 8 technisch gleichverhalten. Das Schienenfahrzeug 4 kann noch andere Motoren (z.B. in der Lüftungsanlage usw.) umfassen, welche sich jedoch nicht technisch gleich zu den Motoren 10 der Drehgestelle 8 verhalten.

Die technisch gleichverhaltenden Komponenten beinhalten aus diesem Grund nur die Motoren 10 der Drehgestelle 8, im Folgenden kurz Motoren 10. Diese Information wird an die Auswerteeinheit 18 übergeben. Prinzipiell kann die Auswerteeinheit 18 diese Information auch selbst ermitteln.

Die technisch gleichverhaltenden Komponenten, hier die Motoren 10, zeigen ein Funktionsverhalten.

Das Funktionsverhalten des jeweiligen Motors 10 ist zweckmäßigerweise abhängig von zumindest einem Betriebsparameterwert des jeweiligen Motors 10. Ein Betriebsparameterwert des jeweiligen Motors 10 ist z.B. eine Motor-Temperatur. Der Betriebsparameterwert des Motors 10 kann auch ein Betriebsparameterwert einer übergeordneten Struktureinheit sein, welcher Einfluss auf das Funktionsverhalten des jeweiligen Motors 10 hat. Beispielsweise kann ein Betriebsparameterwert des jeweiligen Motors 10 eine Geschwindigkeit des jeweiligen Schienenfahrzeugs 4 sein.

Das Funktionsverhalten des jeweiligen Motors 10 kann unter Verwendung des zumindest einen Betriebsparameterwerts des jeweiligen Motors 10 beschrieben werden.

In der Auswerteeinheit 18 ist ein Computerprogramm hinterlegt. Die Betriebsparameterwerte der Motoren 10 werden an die Auswerteeinheit 18 übermittelt. Dabei werden die Betriebsparameterwerte der Motoren 10 insbesondere an das Computerprogramm übergeben.

Das jeweilige Funktionsverhalten der technisch gleichverhaltenden Komponenten, hier der Motoren 10, wird jeweils mittels des Computerprogramms modelliert. Dabei verarbeitet das Computerprogramm zur Modellierung jeweils zumindest einen Betriebsparameter des jeweiligen Motors 10.

Das Computerprogramm zur Modellierung des Funktionsverhaltens des jeweiligen Motors 10 verwendet bestimmte Sensoren als Input, beispielsweise den Temperatursensor 12 des jeweiligen Motors 10 und den Geschwindigkeitssensor 14 des jeweiligen Schienenfahrzeugs 4, in welchen der Motor 10 angeordnet ist. Auf diese Weise werden als Betriebsparameterwerte beispielsweise die Motor-Temperatur und die Schienenfahrzeug-Geschwindigkeit genutzt.

Bei der Modellierung des Funktionsverhaltens des jeweiligen Motors 10 kann einerseits ein statistisch erstelltes Langzeit-Verhalten für jeden Motor 10 und andererseits eine Charakteristik kurzzeitigen Verhaltens im operativen Betrieb erstellt werden. Dabei wird bei der Modellierung das modellierte Funktionsverhalten separat für jeden der Motoren 10 unter Verwendung von maschinellen Lernmethoden trainiert. Die Charakteristik einer jeweiligen Modellierung wird gespeichert. Die Charakteristik der Modellierung umfasst z.B. Fitting Parameter, Gewichte in einem Neuronalen Netz, Entscheidungsfunktionen, Hauptkomponenten, etc.. Außerdem wird die Modellierung des jeweiligen Funktionsverhaltens auf Betriebsparameterwerte im laufenden Betrieb angewandt. Die Ausgabe zu Klassen, Abweichungen, etc. wird gespeichert, um die Eigenschaften der kurzfristigen und möglicherweise betriebsbedingten Abweichungen zu erhalten.

Beispielsweise wird durch die Modellierung des Funktionsverhaltens eines jeden Motors 10 in FIG 1 seine Temperatur-Normkurve als zeitunabhängiges, statistisches Motor-Langzeit-Verhalten (d.h. eine Normkurve) erhalten. Außerdem wird bei der Modellierung des Funktionsverhaltens eines jeden Motors 10, insbesondere aus dem laufenden Betrieb, eine Zeitreihe der Abweichungen von diesem Motor-Langzeit-Verhalten erhalten.

Das Funktionsverhalten des jeweiligen Motors 10 wird jeweils anhand einer Funktionsgröße beschrieben. Die jeweilige Funktionsgröße kann eindimensional oder mehrdimensional sein.

Die Funktionsgröße kann beispielsweise die bei der Modellierung berechneten Abweichungen von der zuvor erlernten Normalkurve beschreiben. Die berechneten Abweichungen können über ein vorgegebenes Zeitintervall gemittelt werden/sein.

Zweckmäßigerweise findet die Modellierung unter Verwendung eines Modells statt.

Die Funktionsgrößen können sein:

i. Für Hauptkomponenten-Modelle (Vektor-Ausgabe im Raum der Eigenschaften): Der Winkel zwischen den Hauptkomponenten-Vektoren v_A und v_B der Modelle A und B, d.h. acos(<v_A,v_B>/(|v_A||v_B|)), wobei <> das Skalarprodukt und |.| die Vektornorm darstellt. Dieser Wert ist 0, wenn v_A und v_B in die gleiche Richtung weisen.

ii. Für Matrix-wertige Charakteristika (z.B. Gewichte eines neuronalen Netzes): Eine Distanz basierend auf einer der Standard-Matrix-Normen (insbesondere euklidische Norm für Matrizen und Vektoren und Eigenvektor-Norm.

iii. Für kontinuierliche Charakteristika (z.B. die von der Entscheidungsfunktion eines Klassifizierers eingeschlossenen Bereiche eines N-dimensionalen Raumes, für den dieser bestimmte Klassen zuordnet): Eine Distanz basierend auf dem Skalarprodukt $\int D_A(x) \cdot D_B(x) dx^N$, wobei $D_A$ und $D_B$ die auf $\int D_A(x)^2 dx^N$ normierten Entscheidungsfunktionen der Modelle A und B sind und das Integral $\int$ über den gesamten Zustandsraum des Vektors x berechnet wird. Die gleiche Metrik gilt auch für Klassifikatoren, deren Charakteristik entsprechende Wahrscheinlichkeitsverteilungen sind.

Zur Verbesserung der Ergebnisse kann bei den Fällen ii. und iii. zunächst eine Faltung mit einer schmalen Standard-Verteilung vorgenommen werden oder mehrere der o.g. Normen miteinander kombiniert werden.

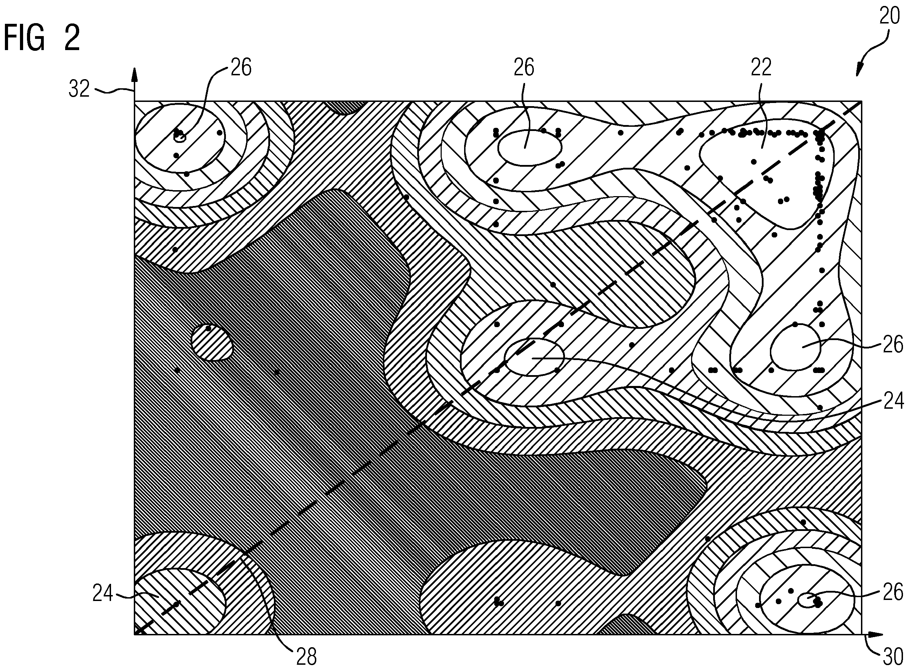

Die technisch gleichverhaltenden Komponenten, hier die Motoren 10, werden unter Verwendung ihres Funktionsverhaltens in Cluster gruppiert (vgl. FIG 2). Zur Gruppierung werden die Funktionsverhalten der Motoren 10 untereinander verglichen. Dazu werden die das Funktionsverhalten der Motoren 10 beschreibende Funktionsgrößen untereinander verglichen. Anhand des Vergleichs der Funktionsgrößen wird die Ähnlichkeit des Funktionsverhaltens ermittelt.

Die jeweilige Funktionsgröße ist in diesem Beispiel ein Vektor.

In diesem Beispiel umfasst die jeweilige Funktionsgröße beispielsweise folgende drei Vektorelemente:

    1. die Mittelwerte der Motor-Temperaturen der über 1 Jahr trainierten Modelle,
    2. die Winkelabweichung der Hauptkomponenten der über 1 Jahr trainierten Modelle und
    3. die über den Betrieb eines Tages gemittelte Norm des Kreuzproduktes der Abweichungsvektoren von der Hauptkomponente.

Bei dem Vergleich der jeweiligen Funktionsgrößen untereinander wird ein Vergleichswert ermittelt, welcher die Ähnlichkeit der miteinander verglichenen Funktionsgrößen beschreibt. Der Vergleichswert ist beispielsweise eine Distanz zwischen den miteinander verglichenen Funktionsgrößen.

Die technisch gleichverhaltenden Komponenten, hier die Motoren 10, werden unter Verwendung der Vergleichswerte in Cluster gruppiert.

Dabei werden anhand der Vergleichswerte, hier der Distanzen, Cluster ähnlicher Funktionsgrößen und damit ähnlicher Funktionsverhalten berechnet.

FIG 2 zeigt ein Diagramm 20. In dem Diagramm 20 ist ein Vektorelement der Funktionsgröße eines beliebigen ersten Motors 10 eines beliebigen Drehgestells 8 der Flotte 2 (x-Achse 30) gegen ein gleichartiges Vektorelement der Funktionsgröße eines zweiten Motors 10 desselben Drehgestells 8 (y-Achse 32) aufgetragen. Beispielsweise ist eine Temperaturabweichung vom Normalverhalten eines beliebigen ersten Motors 10 der Flotte 2 (x-Achse 30) gegen eine Temperaturabweichung vom Normalverhalten eines zweiten Motors 10 desselben Drehgestells 8 (y-Achse 32) aufgetragen.

Das Verhalten der untereinander verglichenen Motoren 10 ist jeweils als Punkt eingezeichnet und spiegelt das Funktionsverhalten des jeweiligen Drehgestells 8 wieder. Die Motoren 10 werden in FIG 2 also auf Drehgestell-Ebene miteinander verglichen.

Die weißen Flächen in Diagramm 20 stellen die Cluster 22, 26 dar. Auch Bereiche mit einer weiten Schraffur, welche von Bereichen mit engerer Schraffur umgeben sind, stellen Cluster 24 dar.

Ein jeweiliger Cluster 22, 24, 26 umfasst diejenigen technisch gleichverhaltenden Komponenten (hier die Drehgestelle 8 mit ihren jeweiligen Motoren 10 der jeweiligen Drehgestelle 8), die sich sowohl im modellierten Langzeitverhalten als auch in den betrieblichen Auffälligkeiten aus dem modellierten Kurzzeitverhalten ähnlich verhalten.

Die Drehgestelle 8 bzw. deren Motoren 10 werden in diesem Beispiel unter Verwendung eines partitionierenden Clusterverfahrens, insbesondere unter Verwendung eines sogenannten K-Means-Clusterverfahrens gruppiert.

Diejenigen Drehgestelle 8 (bzw. deren Motoren 10), die sich ähnlich verhalten, sind in einem gleichen Cluster 22, 24, 26 gruppiert. Außerdem sind diejenigen Drehgestelle 8 (bzw. deren Motoren 10), die sich verschieden verhalten, in verschiedenen Clustern 22, 24, 26 gruppiert.

Beispielsweise können unter Verwendung der Funktionsgrößen statistische Auffälligkeiten ("outlier") identifiziert werden. In diesem Beispiel kann, insbesondere anhand der Größe der Cluster, erkannt werden, dass der größte Cluster 22, welcher sich im Diagramm 20 oben rechts befindet, einem normalen Funktionsverhalten der Drehgestelle 8 (bzw. deren Motoren 10) entspricht. D.h. alle Drehgestelle 8, deren erster Motor 10 bei dem Vergleich mit dem zweiten Motor 10 desselben Drehgestells 8 einen Punkt innerhalb des größten Clusters 22 (zeichnungsgemäß oben rechts) ergeben, zeigen ein normales Funktionsverhalten und sind somit unauffällig.

Alle anderen Cluster 24, 26 können, insbesondere aufgrund ihrer Größe, als statistisch auffällige Cluster 24, 26 angesehen werden. Insbesondere können alle Drehgestelle 8, deren erster Motor 10 bei dem Vergleich mit dem zweiten Motor 10 desselben Drehgestells 8 einen Punkt außerhalb des größten Clusters 22 ergeben, als auffällig gelten. Die auffälligen Cluster sind in diesem Beispiel die Cluster 24, 26. Auch die übrigen Punkte im Diagramm 20, welche jeweils als Ein-Punkt-Cluster angesehen werden können, können als auffällig gelten.

Zur automatischen Erkennung der statistisch auffälligen Cluster kann beispielsweise eine sogenannte elastische OneClass-SupportVector-Maschine verwendet werden.

Bei dem Vergleich wird jedem Motor 10 außerdem ein Grad der Ungewöhnlichkeit, auch Grad der Auffälligkeit, zugeordnet. Der Grad der Ungewöhnlichkeit ist in dem Diagramm 20 in FIG 2 als Schraffur dargestellt. Je enger die Schraffur, desto höher ist der Grad der Ungewöhnlichkeit. Je höher der Grad der Ungewöhnlichkeit ist, desto auffälliger ist das jeweilige Drehgestell 8.

Die technischen Abhängigkeiten der Clusterelemente zumindest eines statistisch auffälligen Clusters 24, 26, insbesondere aller statistisch auffälligen Cluster 24, 26, wird dann ermittelt. Auf diese Weise können die Zugehörigkeiten der Clusterelemente des zumindest einen statistisch auffälligen Clusters 24, 26 zu den Strukturebenen ermittelt werden. Ferner kann auf diese Weise die Auffälligkeit einem Strukturelement zugeordnet werden.

Insbesondere kann aus dem Muster der Cluster 22 die Strukturebene einer Auffälligkeit und somit letztlich die auffällige Struktureinheit bestimmt werden.

Jeder der Motoren 10 (m) eines jeweiligen Drehgestells 8 kann jeweils einen Cluster 22 ($c_m$) zuge-

ordnet werden. Weiter kann jedem Motor 10 (m) eine "Ungewöhnlichkeit" ($d_m$) zuordnet werden.

Für jede Strukturebene (1) werden allen Motoren 10 (m) die gleiche Hierarchiezahl ($h_{lm}$) zugeordnet. Für jeden Cluster 22, 24, 26 (c) und jede Strukturebene (1) werden zwei Kenngrößen berechnet:

- $b_c = \sum_m d_m / N_c$, separat für alle c, wobei m jeweils über alle Motoren in Cluster c läuft. Intuitiv entspricht $b_c$ damit der durchschnittlichen Ungewöhnlichkeit des Clusters.

- $a_{cl} = \sum_h \left(\frac{\Theta_h(c,l)}{S}\right)^4$, wobei

  - in der ersten Summe h über alle $h_{lm}$ läuft, die für die Strukturebene l vorkommen, also h in $\{h_{lm}: \text{all } m\}$,
  - $\Theta_h(c,l)$ die Anzahl der Motoren (10) angibt, für die in der Strukturebene gilt: $h_{lm}=h$ und $c_m=c$, also die Anzahl der Motoren (10) in der Struktureinheit mit der Hierarchiezahl h, die dem Cluster c angehören,
  - S die Normalisierung $S = \sqrt{\sum_h \Theta_h(c,l)^2}$ ist.

In Worten: Der Koeffizient $a_{cl}$ gibt an, wie stark die ähnlichen Motoren 10 des Clusters c auf Strukturebene 1 auf einer bestimmten Struktureinheit innerhalb dieser Strukturebene beschränkt sind, oder ob die Motoren 10 des Clusters c über alle verschiedenen Struktureinheiten verteilt sind. Der Wertebereich von $a_{cl}$ ist $[1/N_{hl}, 1]$, wobei $N_{hl}$ die Anzahl der gleichartigen Struktureinheiten (verschiedene Werte von h) auf Strukturebene 1 angibt. $a_{cl}=1$ bedeutet, dass der Cluster c nur auf einer einzigen Struktureinheit existiert, während $a_{cl}=1/N_{hl}$ eine gleichmäßige Verteilung auf alle Struktureinheiten anzeigt.

Auffällig sind diejenigen Cluster 24, 26 mit großen Werten für ihre durchschnittliche Ungewöhnlichkeit $b_c$ und die außerdem hohe $a_{cl}$-Werte aufweisen. Der Ursprung der wichtigsten Auffälligkeiten wird identifiziert, indem mit den Clustern 24, 26 mit der höchsten Ungewöhnlichkeit begonnen wird oder relevante Cluster 24, 26 mittels eines definierten Grenzwerts identifiziert werden. Die technischen Abhängigkeiten der Clusterelemente dieser Cluster 24, 26 werden ermittelt. Dafür werden die Zugehörigkeiten der Clusterelemente dieser Cluster 24, 26 zu den Strukturebenen ermittelt.

Auf Drehgestell-Ebene (1=2):

- Cluster 26, die außerhalb der Diagonalen 28 liegen: nur ein Drehgestell ist Teil des betrachteten auffälligen Clusters 26.
  Es gilt dann auf Drehgestell-Ebene:

$$a_{c2} = \sum_{DG} \left(\frac{\Theta_{DG}(c,2)}{S}\right)^4 = \left(\frac{1}{1}\right)^4 = 1 ,$$

d.h. jeder der Cluster 26 ist auf einem einzigen Drehgestell 8 lokalisiert.

D.h. die Clusterelemente des jeweiligen Clusters 26 gehören fest zu einem bestimmten Drehgestell 8. Es kann davon ausgegangen werden, dass die Clusterelemente (die Drehgestelle 8 bzw. deren Motoren 10) dieser auffälligen Cluster 26 eine Auffälligkeit, beispielsweise einen Defekt, aufweisen. D.h., es handelt sich um eine relevante Auffälligkeit bei dem betreffenden Drehgestell 8.

- Cluster 24, die auf der Diagonalen 28 liegen, die aber nicht dem größten Cluster entsprechen:
  $a_{cl} < 1$ da jeder der Cluster 24 über mehrere Drehgestelle 8 verteilt ist.
- zum Vergleich: Cluster 22, der größte Cluster (zeichnungsgemäß oben rechts), der auf der Diagonalen 28 liegt:
  Drehgestelle 8 verschiedener Schienenfahrzeuge 4 sind Teil des Clusters 22.

$$a_{c2} = \sum_{DG} \left(\frac{\Theta_{DG}(c,3)}{S}\right)^4 = r\left(\frac{1}{\sqrt{r}}\right)^4 = 1/r ,$$

da die Summe über die r Drehgestelle läuft.

Auf Wagen-Ebene, entspricht bei nur einem betrachteten Wagen pro Schienenfahrzeug 4 der Schienenfahrzeug-Ebene (1=1):

- Cluster 26:

$$a_{c1} = \sum_{Loks} \left(\frac{\Theta_{DG}(c,3)}{S}\right)^4 = \left(\frac{1}{1}\right)^4 = 1,$$

da der Cluster 26 nur auf einem der Drehgestelle 8 auftritt.

- ein erster der Cluster 24:

$$a_{c1} = \frac{1}{1} = 1,$$

da dieser Cluster 24 nur auf einem Wagen 6 und auf einem Schienenfahrzeug 4 auftritt. Es handelt sich um eine relevante Auffälligkeit bei dem betreffenden Wagen 6.

- der anderer der Cluster 24:

$$a_{c1} = 1/r ,$$

da dieser Cluster 24 auf r Schienenfahrzeugen 4 gleichermaßen auftritt.

Die Motoren 10 dieses Clusters 24 sind also über r Schienenfahrzeuge 4 verteilt. Damit handelt es sich nicht um eine relevante Auffälligkeit, sondern um ein betriebsbedingtes Verhalten.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1.  Verfahren zur Untersuchung eines Funktionsverhaltens eines technischen Systems (2) aufweisend mehrere Komponenten (4, 6, 8, 10, 12, 14, 16) und eine sich anhand von technischen Abhängigkeiten der Komponenten (4, 6, 8, 10, 12, 14, 16) ergebenden Systemstruktur,
    bei dem

    - anhand der Systemstruktur aus den mehreren Komponenten (4, 6, 8, 10, 12, 14, 16) technisch gleichverhaltende Komponenten (10) ermittelt werden,
    - die technisch gleichverhaltenden Komponenten (10) unter Verwendung ihres Funktionsverhaltens in Cluster (22, 24, 26) gruppiert werden und
    - technische Abhängigkeiten der Clusterelemente mindestens eines der Cluster (22, 24, 26) ermittelt werden.

2.  Verfahren nach Anspruch 1,
    **dadurch gekennzeichnet, dass**
    das jeweilige Funktionsverhalten der technisch gleichverhaltenden Komponenten (10) jeweils mittels eines Computerprogramms modelliert wird, wobei das Computerprogramm zur Modellierung jeweils zumindest einen Betriebsparameter der jeweiligen Komponente (10) verarbeitet.

3.  Verfahren nach Anspruch 2,
    **dadurch gekennzeichnet, dass**
    das jeweilige Funktionsverhalten unter Verwendung von maschinellen Lernmethoden modelliert wird.

4.  Verfahren nach einem der vorhergehenden Ansprüche, **dadurch gekennzeichnet, dass**
    zur Gruppierung die Funktionsverhalten der technisch gleichverhaltenden Komponenten (10) untereinander verglichen werden und die technisch gleichverhaltenden Komponenten (10) anhand einer Ähnlichkeit ihres Funktionsverhaltens in Cluster (22, 24, 26) gruppiert werden.

5.  Verfahren nach Anspruch 4,
    **dadurch gekennzeichnet, dass**
    die Funktionsverhalten der technisch gleichverhaltenden Komponenten (10) untereinander verglichen werden, indem das Funktionsverhalten der jeweiligen Komponenten (10) beschreibende Funktionsgrößen untereinander verglichen werden und bei dem Vergleich der jeweiligen Funktionsgrößen untereinander ein Vergleichswert ermittelt, welcher die Ähnlichkeit der miteinander verglichenen Funktionsgrößen beschreibt.

6.  Verfahren nach einem der vorhergehenden Ansprüche, **dadurch gekennzeichnet, dass**
    das jeweilige Funktionsverhalten der technisch gleichverhaltenden Komponenten (10) jeweils unter Verwendung einer mehrdimensionalen Funktionsgröße beschrieben wird.

7.  Verfahren nach einem der vorhergehenden Ansprüche, **dadurch gekennzeichnet, dass**
    die technisch gleichverhaltenden Komponenten (10) unter Verwendung eines partitionierenden Clusterverfahrens und/oder eines hierarchischen Clusterverfahrens in Clustern (22, 24, 26) gruppiert werden.

8.  Verfahren nach einem der vorhergehenden Ansprüche, **dadurch gekennzeichnet, dass**
    zumindest ein statistisch auffälliger Cluster (24, 26) identifiziert wird und technische Abhängigkeiten der Clusterelemente dieses zumindest einen statistisch auffälligen Clusters (24, 26) ermittelt werden.

9.  Verfahren nach einem der vorhergehenden Ansprüche, **dadurch gekennzeichnet, dass**
    die Systemstruktur eine Baumstruktur, eine Grafenstruktur oder eine Netzwerkstruktur ist.

10. Verfahren nach einem der vorhergehenden Ansprüche, **dadurch gekennzeichnet, dass**
    die Systemstruktur Strukturebenen aufweist und die Zugehörigkeiten der Clusterelemente des zumindest einen Clusters (22, 24, 26) zu den Strukturebenen ermittelt werden.

11. Verfahren nach einem der vorhergehenden Ansprüche, **dadurch gekennzeichnet, dass**
    zumindest das Gruppieren in Cluster (22, 24, 26) und die Ermittlung der technischen Abhängigkeiten automatisch ablaufen.

12. Verfahren nach einem der vorhergehenden Ansprüche, **dadurch gekennzeichnet, dass**
    das System (2) zumindest eine technische Anlage umfasst, insbesondere dass das System (2) ein Verband mehrerer technischer Anlagen ist.

**13.** Verfahren nach einem der vorhergehenden Ansprüche **dadurch gekennzeichnet, dass** das System (2) eine Fahrzeugflotte (2) mehrerer Fahrzeuge (4), insbesondere eine Fahrzeugflotte (2) mehrerer Schienenfahrzeuge (4), ist.

**14.** Auswerteeinheit (18) zur Untersuchung eines Funktionsverhaltens eines technischen Systems (2), wobei letzteres mehrere Komponenten (4, 6, 8, 10, 12, 14, 16) und eine sich anhand von technischen Abhängigkeiten der Komponenten (4, 6, 8, 10, 12, 14, 16) ergebenden Systemstruktur aufweist, wobei anhand der Systemstruktur aus den mehreren Komponenten (4, 6, 8, 10, 12, 14, 16) technisch gleichverhaltende Komponenten (10) ermittelbar sind, welche Auswerteeinheit (18) dazu eingerichtet ist,

- sich technisch gleichverhaltende Komponenten (10) unter Verwendung ihres Funktionsverhaltens in Cluster (22, 24, 26) zu gruppieren und
- technische Abhängigkeiten der Clusterelemente mindestens eines der Cluster (22, 24, 26) zu ermitteln.

FIG 1

FIG 2

Europäisches
Patentamt

European
Patent Office

Office européen
des brevets

**EUROPÄISCHER RECHERCHENBERICHT**

Nummer der Anmeldung

EP 18 19 2372

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | RÖGNVALDSSON THORSTEINN ET AL: "Self-monitoring for maintenance of vehicle fleets", JOURNAL OF DATA MINING AND KNOWLEDGE DISCOVERY, NORWELL, MA, US, Bd. 32, Nr. 2, 17. August 2017 (2017-08-17), Seiten 344-384, XP036440363, ISSN: 1384-5810, DOI: 10.1007/S10618-017-0538-6 [gefunden am 2017-08-17] * Abschnitte 3 und 4 * ----- | 1-14 | INV. G06N20/00 B61L1/00 B61C3/00 |
| A | BRACKE S ET AL: "Reliability analysis regarding product fleets in use phase: Multivariate cluster analytics and risk prognosis based on operating data", 2016 INTERNATIONAL CONFERENCE ON CONTROL, DECISION AND INFORMATION TECHNOLOGIES (CODIT), IEEE, 6. April 2016 (2016-04-06), Seiten 210-215, XP032981151, DOI: 10.1109/CODIT.2016.7593562 [gefunden am 2016-10-18] * der vorletzte Absatz des ersten Abschnitts * * Abschnitt V * * Abbildungen 3, 4 * ----- | 1-14 | RECHERCHIERTE SACHGEBIETE (IPC) G06N B61L B61C |
| A | EP 3 109 801 A1 (NAT UNIV IRELAND GALWAY [IE]) 28. Dezember 2016 (2016-12-28) * Anspruch 1 * * Abbildung 1 * ----- | 1-14 | |

Der vorliegende Recherchenbericht wurde für alle Patentansprüche erstellt

| Recherchenort | Abschlußdatum der Recherche | Prüfer |
|---|---|---|
| Den Haag | 1. Februar 2019 | Theissing, Simon |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

&.....................................................................
& : Mitglied der gleichen Patentfamilie, übereinstimmendes
   Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 18 19 2372

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-02-2019

| Im Recherchenbericht angeführtes Patentdokument | Datum der Veröffentlichung | Mitglied(er) der Patentfamilie | Datum der Veröffentlichung |
|---|---|---|---|
| EP 3109801 A1 | 28-12-2016 | EP 3109801 A1<br>US 2018189664 A1<br>WO 2016207369 A1 | 28-12-2016<br>05-07-2018<br>29-12-2016 |

Für nähere Einzelheiten zu diesem Anhang : siehe Amtsblatt des Europäischen Patentamts, Nr.12/82

EPO FORM P0461